(19) Europäisches Patentamt
European Patent Office
Office européen des brevets

(11) **EP 3 389 319 B1**

(12) **EUROPEAN PATENT SPECIFICATION**

(45) Date of publication and mention
of the grant of the patent:
**10.03.2021 Bulletin 2021/10**

(21) Application number: **16872227.0**

(22) Date of filing: **14.10.2016**

(51) Int Cl.:
***H04W 56/00*** *(2009.01)*

(86) International application number:
**PCT/CN2016/102172**

(87) International publication number:
**WO 2017/097033 (15.06.2017 Gazette 2017/24)**

(54) **BEAM PROCESSING METHOD AND BASE STATION**

STRAHLBEARBEITUNGSVERFAHREN UND BASISSTATION

PROCÉDÉ DE TRAITEMENT DE FAISCEAU ET STATION DE BASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2015 CN 201510897285**

(43) Date of publication of application:
**17.10.2018 Bulletin 2018/42**

(73) Proprietor: **ZTE Corporation
Shenzhen, Guangdong 518057 (CN)**

(72) Inventors:
• **CHEN, Lin
Shenzhen
Guangdong 518057 (CN)**

• **ZHANG, Fang
Shenzhen
Guangdong 518057 (CN)**

(74) Representative: **Studio Torta S.p.A.
Via Viotti, 9
10121 Torino (IT)**

(56) References cited:
**EP-A1- 2 916 601       CN-A- 103 782 636
CN-A- 103 812 546       CN-A- 103 918 196
US-A1- 2013 064 239     US-A1- 2014 321 375**

**Description**

**TECHNICAL FIELD**

The present disclosure relates to the fifth generation (5G) mobile communication technology, and particularly to a beam processing method and a base station.

**BACKGROUND**

In order to achieve the 5G mobile communication technology (5G) target, that is, 1000 times more mobile data traffic per area, 10 to 100 times more throughput per user, 10 to 100 times more connection equipment, and 10 times more battery lifetime for low power devices, and 5 times more reduction in end-to-end delay. Two of the most significant features are: throughput and peak rate are increased by 1 to 2 orders, and end-to-end delay is decreased several times.
In order to achieve the 5G goal, some new wireless technology solutions are proposed in 5G. Among them, the use of large bandwidth (such as 500M-1GHz) in the millimeter wave band is the main solution to solve the exponential increase in the throughput of future data services; and the end-to-end delay is mainly reduced by shortening the subframe structure and reducing the Hybrid Automatic Repeat Request (HARQ). For consideration of high frequency subframe structure and multi-antenna transmission, reference signals, synchronization signals, and control channels and so on need to be redesigned based on a beam ID (beam Identifier or identity) to meet the 5G design goal.
At present, based on the high frequency subframe structure, no related solution has been proposed, and terminals cannot distinguish beams.
US2014/321375 relates to the field of wireless communication systems, and more particularly relates to method and system for acquiring high frequency carrier in a wireless communication network.
US2013/064239 relates to an apparatus and method for obtaining synchronization by using a Synchronization Channel (SCH) subjected to beamforming in a wireless communication system.
EP2916601 relates to the field of wireless communication technology and particularly to a signal processing method, eNB, UE and system.
However, the above-mentioned issues are not overcome.

**SUMMARY**

In order to solve the above technical problem, the present invention provides a beam processing method and a base station as defined in the appended claims.

**BRIEF DESCRIPTION OF THE DRAWINGS**

The drawings described herein are provided to provide a further understanding of the present disclosure, and constitute a part of the present application. The exemplary embodiments of the present disclosure and descriptions thereof are used to explain the present disclosure, and do not constitute improper limits to the present disclosure. In the drawing:

Fig. 1 is a schematic diagram of a hybrid beamforming architecture in the related art.
Fig. 2(a) is a schematic diagram of a high frequency uplink subframe structure according to an embodiment of the present disclosure.
Fig. 2(b) is a schematic diagram of a high frequency downlink subframe structure according to an embodiment of the present disclosure.
Fig. 3 is a flowchart of a beam processing method according to an embodiment of the present disclosure.
Fig. 4 is a schematic diagram illustrating a position of a time-frequency resource of a beam-based synchronization signal according to an embodiment of the present disclosure.
Fig. 5 is a schematic diagram illustrating a position of a time-frequency resource of a beam-based reference signal according to an embodiment of the present disclosure.
Fig. 6 is a schematic flowchart illustrating PSS detection in initial cell discovery at a single antenna port according to a first embodiment of the present disclosure.
Fig. 7 is a schematic flowchart illustrating SSS detection in initial cell discovery at a single antenna port according to a first embodiment of the present disclosure.
Fig. 8 is a schematic flowchart illustrating RSRP detection in initial cell discovery at a single antenna port according to a first embodiment of the present disclosure.
Fig. 9 is a schematic flowchart illustrating PSS detection in initial cell discovery at multi-antenna ports according to a second embodiment of the present disclosure.

Fig. 10 is a schematic flowchart illustrating SSS detection in initial cell discovery at multi-antenna ports according to a second embodiment of the present disclosure.

Fig. 11 is a schematic flowchart illustrating RSRP detection in initial cell discovery at multi-antenna ports according to a second embodiment of the present disclosure.

Fig. 12 is a block diagram illustrating a base station according to an embodiment of the present disclosure.

Fig. 13 is a block diagram illustrating a terminal according to an embodiment of the present disclosure.

## DETAILED DESCRIPTION

To make the objectives, technical solutions, and advantages of the present disclosure clearer, the following describes the embodiments of the present disclosure in detail with reference to the accompanying drawings. It should be noted that, in the case of no conflict, the embodiments in the present disclosure and the features in the embodiments may be combined with each other arbitrarily.

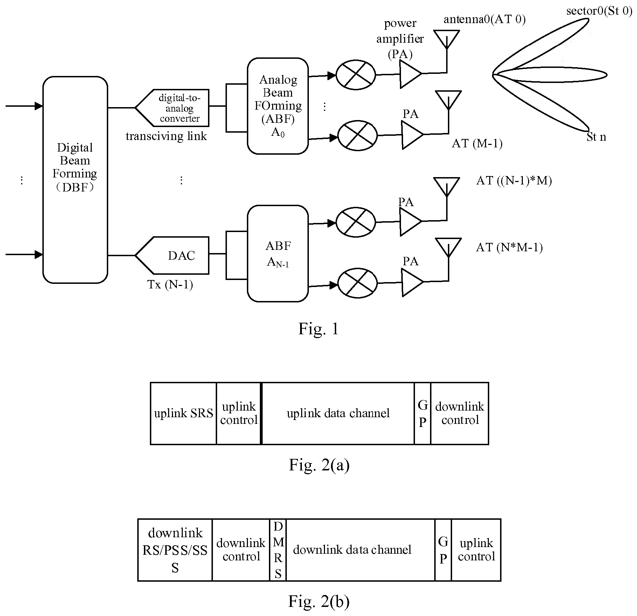

Fig. 1 is a schematic diagram of a hybrid beamforming architecture in the related art. An N×M hybrid beamforming architecture is shown in Fig. 1. There are N transceiving links, and each transceiving link is connected to M antennas. Analog Beam forming (ABF) operates on the M antennas of each transceiving chain and may be adjusted for each antenna's phase.

Digital beam forming (DBF) operates on N transceiving links and can perform different phase operations for different frequencies. A digital-to-analog converter (DAC) operates on N transceiving links. A power amplifier (PA) is a power amplifier for each antenna. Antennas AT 0, AT1,..., AT (M-1) represent different antennas of one transceiving link, respectively. A transceiving link is configured as a port, or two transceiving links are configured as a port, depending on the implementations.

Embodiments of the present disclosure propose a high frequency subframe structure in a high frequency frame structure framework pre-agreed by a base station side and a terminal side.

The entire subframe is divided into independent fields, including: a reference and synchronization signal field, a control signal field, a data transmission area, and a control signal feedback field. Fig. 2(a) is a schematic diagram of a high frequency uplink subframe structure according to an embodiment of the present disclosure. As shown in Fig. 2(a), the uplink reference and the synchronization signal field includes an uplink secondary synchronization signal (SRS) and a preamble, the uplink control signal field includes an uplink control channel, the uplink data transmission field includes an uplink data channel, and the uplink control signal feedback field includes a guard period (GP) and a downlink control channel. Fig. 2(b) is a schematic diagram of a high frequency downlink subframe structure according to an embodiment of the present disclosure. As shown in Fig. 2(b), the downlink reference and synchronization signal field include a reference signal, a primary synchronization signal and a secondary synchronization signal (RS, PSS, and SSS), the downlink control signal field includes a downlink control channel and a DM-RS (Demodulation Reference Signal), the downlink data transmission field includes a downlink data channel, and the downlink control signal feedback field includes a GP and an uplink control channel. The uplink control channel mainly transmits ACK/NACK feedback information. The function of the RS here is equivalent to the function of Common Reference Signal (CRS) and Channel State Information Measurement Pilot (CSI-RS) in LTE.

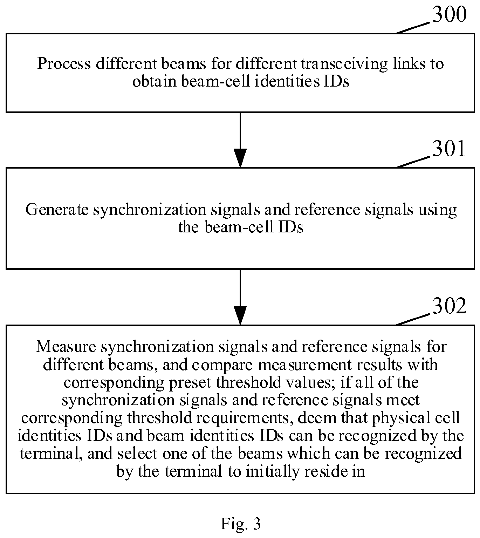

In the beam processing according to the embodiment of the present invention, a time and frequency symbol position and a sequence setting method of a synchronization signal based on different beam IDs, and a time and frequency symbol position and a sequence setting method of a reference signal based on different beam IDs are provided. Fig. 3 is a flowchart of a beam processing method according to an embodiment of the present invention. As shown in Fig. 3, the method at the base station side includes the following steps.

In step 300, different beams of different transceiving links are processed to obtain beam-cell identities IDs.

This step may include uniformly numbering the different beams of different transceiving links, and obtaining a new beam-cell ID $\left( N_{ID}^{BeamCell} \right)$ by adding a physical cell ID and a beam identity ID; or obtaining the beam-cell ID $\left( N_{ID}^{BeamCell} \right)$ by performing linear function mapping, with the physical cell ID and the beam ID as parameters of a function.

For example, the linear function may be as follows: *f(Cell ID, Beam ID) = k · Cell ID + Beam ID* where k is an integer, for example k=0,1,2,...

For example, $N_{ID}^{BeamCell}$ may be divided into a plurality (for example 168) physical beam-cell ID groups (for example, 0~167), each of which includes a preset amount (for example 0~2) of physical beam-cell ID group numbers, i.e., $N_{ID}^{BeamCell} = 3N_{BCID}^{(1)} + N_{BCID}^{(2)}$ where $N_{BCID}^{(1)}$ represents a physical beam-cell ID group number, and $N_{BCID}^{(2)}$ represents a beam ID in a physical group.

In step 301, synchronization signals and reference signals are generated using the beam-cell IDs, where the synchronization signals or reference signals of different beams are staggered in positions on time-frequency resources to generate high frequency subframes.

A primary synchronization signal sequence is generated by beam IDs ( $N_{BCID}^{(2)}$ ) in the physical group(s), and primary synchronization signal sequence mapping is performed. A secondary synchronization signal sequence is generated by $N_{BCID}^{(1)}$ , and secondary synchronization signal sequence mapping is performed. A reference signal sequence is generated by $N_{ID}^{BeamCell}$ , and resource mapping on different ports is performed. A high frequency subframe is generated based on the high frequency subframe structure as shown in Fig. 2(a) or Fig. 2(b).

In the embodiments of the present disclosure, because the synchronization signals or reference signals of different beams are staggered in positions on time-frequency resources, mutual interference can be avoided when beam scanning is performed and multiple beams are transmitted simultaneously.

At the base station, when broadcast information is transmitted, the broadcast information may carry, in addition to the number of ports, the number of beams which can be transmitted in different directions for each port.

Compared with the related art, the reference signal and the synchronization signal in the embodiment of the present invention are set based on the physical cell ID and the beam ID in a cell, so that when adjacent beams overlap partially, the reduction of interference between adjacent beams is achieved. In a multi-user multi-stream operation mode, different beams of different transceiving links at the base station side can send different data streams at the same time, thereby reducing the conditions that the MU-MIMO terminal pairing needs to meet. For different ports of multiple antennas, the time and frequency resources of the synchronization signal and the reference signal are staggered, which reduces the interference between the reference signals at different ports.

The method for generating the synchronization signal and the reference signal in step 301 is described in detail below in conjunction with a specific embodiment.

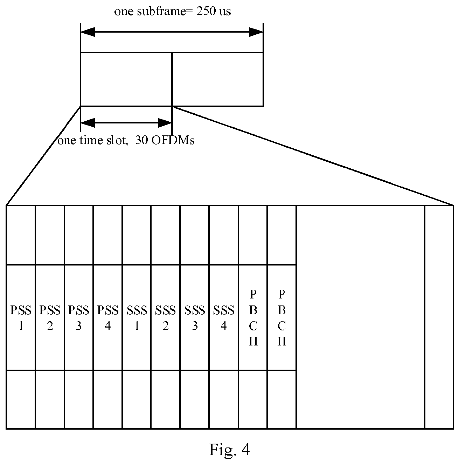

Fig. 4 is a schematic diagram illustrating a position of a time-frequency resource of a beam-based synchronization signal according to an embodiment of the present disclosure. One radio frame includes 10 subframes. As shown in Fig. 4, each of the radio subframe is 100 to 250 us. Each radio subframe includes 2 time slots, and each slot includes 30 Orthogonal Frequency Division Multiplex (OFDM) symbols. The six resource blocks (RBs) in the center of the frequency band carry the PSS, SSS, and Physical Broadcast Channel (PBCH). In this embodiment, it is assumed that the multi-antenna scanning transmits 4 beams or 4 beams are transmitted at the same time, one PSS and SSS sequence needs to be generated for each beam.

The PSS sequence is generated as follows:

Firstly, the multiple-antenna beams are uniformly numbered (or generated by function mapping) to obtain the uniformly numbered beam IDs of the beams. For the multi-port case, the beams emitted by different transmission links can be uniformly numbered, for example, by one to one mapping or a function.

Next, a new beam-cell ID is obtained by adding a physical cell ID and a beam ID; or the beam-cell ID ( $N_{ID}^{BeamCell}$ ) is obtained by performing function mapping, with the physical cell ID and the beam ID as parameters of the function. $N_{ID}^{BeamCell}$ may be divided into a plurality (for example 168) physical beam-cell ID groups (for example, 0~167), each of which includes a preset amount (for example 0~2) of physical beam-cell ID group numbers, i.e., $N_{ID}^{BeamCell} = 3N_{BCID}^{(1)} + N_{BCID}^{(2)}$ where $N_{BCID}^{(1)}$ represents a physical beam-cell ID group number, and $N_{BCID}^{(2)}$ represents a beam ID in a physical group.

A primary synchronization signal sequence is generated by $N_{BCID}^{(2)}$ , and primary synchronization signal sequence mapping is performed. A secondary synchronization signal sequence is generated by $N_{BCID}^{(1)}$ , and secondary synchronization signal sequence mapping is performed.

The primary synchronization signal sequence $d(n)$ may be generated by the frequency domain Zadoff-Chu sequence as shown in equation (1):

$$d_u(n) = \begin{cases} e^{-j\frac{\pi un(n+1)}{63}} & n = 0,1,...,30 \\ e^{-j\frac{\pi u(n+1)(n+2)}{63}} & n = 31,32,...,61 \end{cases} \quad (1)$$

In equation (1), the Zadoff-Chu root sequence index $u$ may be given by Table 1 below.

Table 1

| $N_{BCID}^{(2)}$ | $u$ |
|---|---|
| 0 | 25 |
| 1 | 29 |
| 2 | 34 |

The secondary synchronization signal sequence is represented by $d(0),...,d(61)$, and the manners for generating the sequence by the secondary synchronization signal on the sub frame 0 and the sub frame 5 are different, and the specific equation is as follows:

$$d(2n) = \begin{cases} s_0^{(m_0)}(n)c_0(n) & in\ subframe\ \ 0 \\ s_1^{(m_1)}(n)c_0(n) & in\ subframe\ \ 5 \end{cases}$$

$$d(2n+1) = \begin{cases} s_1^{(m_1)}(n)c_1(n)z_1^{(m_0)}(n) & in\ subframe\ \ 0 \\ s_0^{(m_0)}(n)c_1(n)z_1^{(m_1)}(n) & in\ subframe\ \ 5 \end{cases} \quad (2)$$

In equation (2), $0 \le n \le 30$.

In equation (2), $m_0$ and $m_1$ are obtained by the physical beam-cell ID group numbers $N_{BCID}^{(1)}$, as shown in equation (3):

$$m_0 = m'\bmod 31$$
$$m_1 = (m_0 + \lfloor m'/31 \rfloor + 1)\bmod 31$$
$$m' = N_{BCID}^{(1)} + q(q+1)/2, \quad q = \left\lfloor \frac{N_{BCID}^{(1)} + q'(q'+1)/2}{30} \right\rfloor, q' = \left\lfloor N_{BCID}^{(1)}/30 \right\rfloor \quad (3)$$

In equation (2), $c_0(n) = \tilde{c}((n+N_{BCID}^{(2)})\bmod 31)$ $c_1(n) = \tilde{c}((n+N_{BCID}^{(2)}+3)\bmod 31)$.

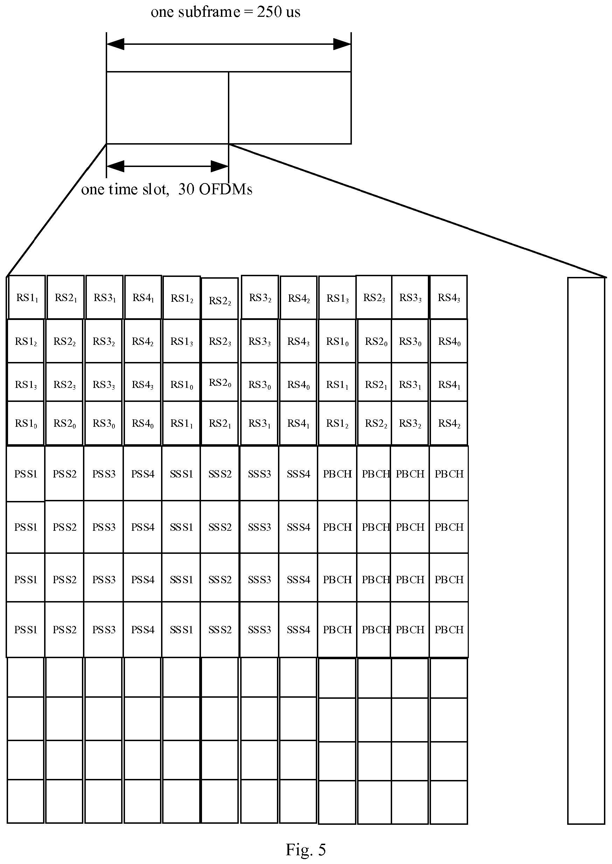

Fig. 5 is a schematic diagram illustrating a position of a time-frequency resource of a beam-based reference signal according to an embodiment of the present disclosure. As shown in Fig. 5, in the embodiment, the synchronization signal(s) is(are) transmitted in the middle of the frequency band for the first time slot in the subframe, and the reference signals are transmitted on both sides. In this embodiment, time-frequency resource mapping of a reference signal is described by using 4 ports, and each port has 4 beams.

For the four beams at port 0, $RS1_0$, $RS2_0$, $RS3_0$, $RS4_0$ correspond to the reference signals of the four beams, i.e., beam 1, beam 2, beam 3, and beam 4, respectively. For the four beams at port 1, $RS1_1$, $RS2_1$, $RS3_1$, $RS4_1$ correspond to reference signals of four beams, i.e., beam 1, beam 2, beam 3, and beam 4, respectively. For the 4 beams at port 2, $RS1_2$, $RS2_2$, $RS3_2$, $RS4_2$ correspond to reference signals of the four beams, i.e., beam 1, beam 2, beam 3, and beam 4, respectively. For the 4 beams at port 3, $RS1_3$, $RS2_3$, $RS3_3$, $RS3_4$ correspond to reference signals of the four beams, i.e., beam 1, beam 2, beam 3, and beam 4, respectively. The reference signal sequence $r_{l,n_s}(m)$ is as shown in equation (4):

$$r_{l,n_s}(m) = \frac{1}{\sqrt{2}}(1-2\cdot c(2m)) + j\frac{1}{\sqrt{2}}(1-2\cdot c(2m+1)), \quad m = 0,1,...,N_{RB}^{\max,DL} - 1$$

$$(4)$$

In equation (4), $n_s$ is a time slot number in a radio frame, and $l$ is a symbol in a time slot.

A pseudo-random sequence generator is initialized by $c_{init}$ show in equation (5):

$$c_{init} = 2^{10} \cdot (7 \cdot (n_s + 1) + l + 1) \cdot (2 \cdot N_{ID}^{BeamCell}) + 2 \cdot N_{ID}^{BeamCell} + N_{CP} \quad (5)$$

In equation (5), $N_{ID}^{BeamCell}$ represents a beam-cell ID, $N_{CP} = \begin{cases} 1 & \text{for normal CP} \\ 0 & \text{for extended CP} \end{cases}$.

In an embodiment of the present disclosure, the method at the terminal side includes the following steps.

In step 302, synchronization signals and reference signals of different beams are measured, and measurement results are compared with corresponding preset threshold values. If all of the synchronization signals and reference signals meet corresponding threshold requirements, it is determined that physical cell identities IDs and beam identities IDs can be recognized by the terminal. The terminal can select one of the beams which can be recognized by the terminal to initially reside in.

In this step, when the terminal performs the initial beam discovery, the terminal searches all the beams; only when the synchronization signal (including the primary synchronization signal and the secondary synchronization signal) of a certain beam and the signal quality of the beam (for example the reference signal receiving power (RSRP)) meet corresponding thresholds, the beam can be recognized by the terminal. The terminal can select the beam having the best signal quality among the identifiable beams as the initial resident beam of the UE.

In the embodiment of the present invention, the terminal can simultaneously identify different beams of different transceiving links, and different beams can transmit different data streams.

That is, the beam processing method provided by the present invention reduces multi-user multiple input multiple output (MU-MIMO) conditions to be satisfied for UE pairing.

The specific implementation process of the initial beam discovery performed by the terminal based on the beam processing method of the present invention is described in detail below with reference to specific embodiments.

In a first embodiment, only one transceiving link is considered, such as Transceiver 0 in Fig. 1. This transceiving link is composed of an antenna AT0, an antenna AT1,..., An antenna AT(M-1), and each transceiving link may have multiple beam directions. In the first embodiment, four beams are used as an example for description, that is, the maximum value of the beam is Kmax=4 . Here, the beam angle may be a narrow beam of about 10 degrees or a wide beam of 30 to 50 degrees. The initial discovery of a beam needs to be completed in the following three steps: PSS signal detection, SSS signal detection, and RSRP signal detection.

Only when the measurement results of the three detection processes meet the preset threshold requirements can it be determined that the beam can be identified or recognized by the terminal.

In the first embodiment, it is assumed that the preset thresholds for the PSS and SSS of beams are the PSS threshold THRD_PSS and the SSS threshold THRD_SSS; the default value of the THRD PSS is 0 dB, and the default value of the THRD SSS is 0 dB.

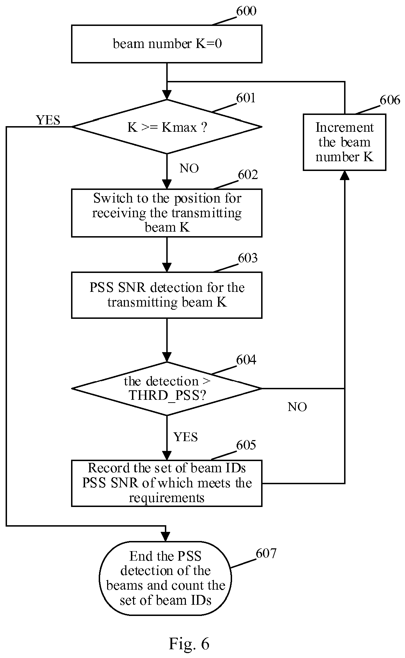

Fig. 6 is a schematic flowchart illustrating PSS detection in initial cell discovery at a single antenna port according to a first embodiment of the present disclosure. As shown in Fig. 6, the method includes the following steps.

In step 600, a terminal initializes the beam number K as 0.

In step 601, the terminal determines whether the beam number K is greater than the maximum value Kmax of the beams. If the beam number K is greater than the maximum value Kmax, the process proceeds to step 607, and if beam number K is not greater than the maximum value Kmax, the process proceeds to step 602.

The maximum value Kmax of the beams can be obtained from the broadcast information.

In step 602, the terminal sequentially detects the signal of each beam until the signal of the transmitting beam K is found.

In step 603, the terminal performs signal-to-noise ratio (SNR) detection on the PSS of the transmitting beam K. The specific implementation of this step may use, for example, the detection of the cell PSS in LTE. The specific implementation is not used to limit the protection scope of the present invention, and will not be repeated in detail here.

In step 604, the terminal determines whether the SNR of the detected PSS is greater than the preset PSS threshold THRD_PSS. If the SNR of the detected PSS is greater than the preset PSS threshold THRD_PSS, the process proceeds to step 605, and if the SNR of the detected PSS is not greater than the preset PSS threshold THRD_PSS, the process proceeds to step 606.

In step 605, the terminal records the SNR of the PSS in the set of beam IDs that meet the threshold requirements, and parses the PSS to obtain the beam ID $N_{BCID}^{(2)}$ in the physical cell group. The specific method is the same as parsing the PSS to obtain the cell ID in the physical group in LTE.

In step 606, the beam number K is incremented, for example by one, and then the process procedure returns to step 601.

It should be noted that the cycle (or traverse) of the beams may be in sequence or not.

In step 607, the beam PSS detection process ends, and the set of beam IDs satisfying the threshold requirements are counted.

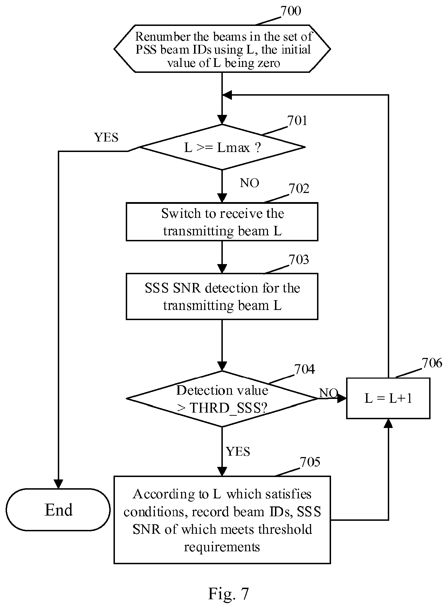

Fig. 7 is a schematic flowchart illustrating SSS detection in initial cell discovery at a single antenna port according to a first embodiment of the present disclosure. As shown in Fig. 7, the method includes the following steps.

In step 700, the beams in the beam set satisfying the PSS threshold THRD_PSS are renumbered with an integer L, and the initial value of L is set as 0.

In step 701, whether the cyclic beam number L is larger than the maximum value Lmax of the beams in the beam set that meets the PSS threshold THRD_PSS is determined. If the cyclic beam number L is larger than the maximum value Lmax, the process ends; if the cyclic beam number L is not larger than the maximum value Lmax, the process proceeds to step 702.

Lmax is the number of beams that satisfy the threshold THRD_PSS.

In step 702, the terminal is adjusted to the mode of receiving the cyclic transmit beam L, that is, the terminal is adjusted to the state of receiving the SSS signal of the transmit beam L. Specific implementation is well-known to a person skilled in the art, and is not intended to limit the protection scope of the present invention, and will not be described here.

In step 703, the terminal performs SNR detection on the SSS of the cyclic transmit beam L.

In step 704, whether the SNR of the detected SSS is greater than the preset SSS threshold THRD_SSS is determined. If the SNR of the detected SSS is greater than the preset SSS threshold THRD_SSS, the process proceeds to step 705; if the SNR of the detected SSS is not greater than the preset SSS threshold THRD_SSS, the process proceeds to step 706.

In step 705, the terminal records the SNR of the SSS in the set of beam IDs that meet the threshold requirements, and parse the SSS to obtain the physical cell group ID $N_{BCID}^{(1)}$ in the physical cell group. Specific implementation is well-known to a person skilled in the art, and is not intended to limit the protection scope of the present invention, and will not be described here. In conjunction with the $N_{BCID}^{(2)}$ obtained in the PSS detection process shown in Fig. 6, a beam cell ID ($N_{ID}^{BeamCell}$) is generated.

In step 706, the cyclic beam number L is incremented, for example by one, and then the process returns to step 701.

It should be noted that the cycling (or traversing) of the beams may be in sequence or not.

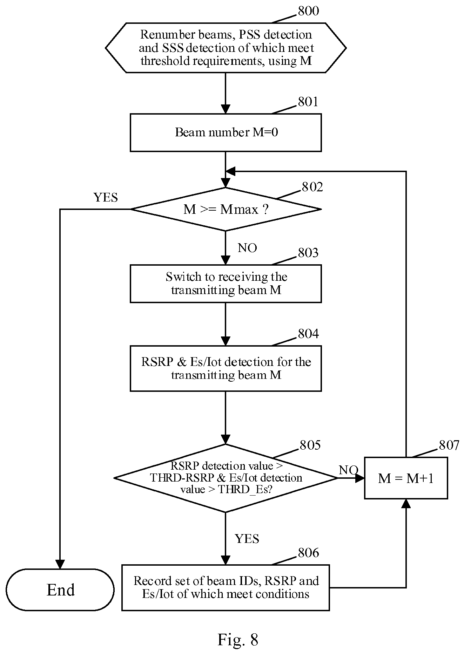

Fig. 8 is a schematic flowchart illustrating RSRP detection in initial cell discovery at a single antenna port according to a first embodiment of the present disclosure. As shown in Fig. 8, the method includes the following steps:

In step 800, the beams that meet the threshold requirements for both the PSS detection and the SSS detection are renumbered by using a cyclic number M.

In step 801, the terminal initializes the beam cyclic number M as an initial value of 0.

In step 802, whether the beam cyclic number M is greater than Mmax is determined. If the beam cyclic number M is greater than Mmax, then the process ends. If the beam cyclic number M is not greater than Mmax, the process proceeds to step 803.

Mmax is the number of beams that simultaneously satisfy the threshold requirements for PSS detection and SSS detection.

In step 803, the terminal is adjusted to the state of receiving the transmit beam M, that is, the terminal is adjusted to receive the transmit beam M. At this time, the signal of the beam M is used as a receiving signal, and signals of other beams are determined as noise.

In step 804, the terminal measures the RSRP and the receiving energy/noise of the resource unit and the receiving power spectral density (Es/Iot) of the interference for the beam M. For example, the threshold of the RSRP may be set to be -127 dBm, and the threshold of the Es/Iot may be set to be -6dB. The specific implementation of this step may be realized using measurements such as RSRP and Es/Iot in LTE. The specific implementation is not intended to limit the protection scope of the present invention, and will not be repeated here.

In step 805, if both the RSRP measurement value and the Es/Iot measurement value are greater than their corresponding preset thresholds, the process proceeds to step 806; if not, go the process proceeds to step 807.

In step 806, the terminal records the set of beam IDs in the physical group the RSRP and the Es/Iot of which satisfy the preset threshold requirements at the same time. Also, all the beams in the set of beam IDs in the physical group are the beam cell IDs that the terminal can recognize.

In step 807, the beam cyclic number M is incremented, for example, incremented by one.

It should be noted that the cycling (or traversing) of the beams may be in sequence or not.

In a second embodiment, the multi-port situation of the antennas are considered. In the second embodiment, one port corresponds to one transceiving link, and there are N ports as shown in Fig. 1. The initial discovery of a beam requires the following three steps: PSS signal detection, SSS signal detection, and RSRP signal detection. Only when the measurement results of the three detection processes meet the preset threshold requirements, it can be determined that the beam can be recognized by the terminal. In the second embodiment, four beams are used as an example for description. That is, the maximum beam value Kmax is 4, the maximum port value Amax is N, and N is 8, 16, 32, and so on.

In the second embodiment, it is assumed that the preset thresholds for the beams PSS and SSS are the PSS threshold THRD_PSS and the SSS threshold THRD_SSS, respectively.

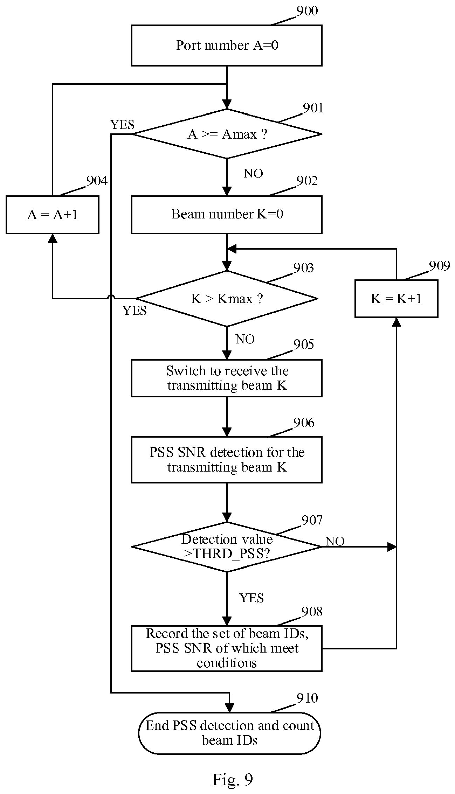

Fig. 9 is a schematic flowchart illustrating PSS detection in initial cell discovery at multi-antenna ports according to a second embodiment of the present disclosure. As shown in Fig. 9, the method includes the following steps.

In step 900, the terminal initializes the port number A as 0.

In step 901, whether the port number A is greater than or equal to the maximum port value Amax is determined. If port number A is greater than or equal to the maximum port value Amax, the process proceeds to step 910. If the port number A is smaller than the maximum port value Amax, the process proceeds to step 902.

In the embodiment of the present invention, in addition to the port number provided in the broadcast information on the base station side, the maximum number of beams per port is also carried. The maximum port value Amax can be obtained in advance by the terminal from the broadcast information.

In step 902, the terminal initializes the beam number K as 0.

In step 903, whether the beam number K is greater than the maximum beam number Kmax is determined. If beam number K is greater than the maximum beam number Kmax, the process proceeds to step 904; if the beam number K is not greater than the maximum beam number Kmax, the process proceeds to step 905.

The maximum beam value Kmax can be obtained from the broadcast information.

In step 904, the port number A is incremented, for example by one, and then the process returns to step 901. It should be noted that the port loop may be performed in order or not.

In step 905, the terminal is adjusted to receive the transmitting beam K, that is, the signal of the transmitting beam K is used as a receiving signal, and the signals of other beams serve as noise.

In step 906, the terminal performs SNR detection on the PSS of the transmitting beam K.

In step 907, whether the detected SNR value of the PSS is greater than the PSS threshold THRD_PSS. If the detected SNR value of the PSS is greater than the PSS threshold THRD_PSS, the process proceeds to step 908. If the detected SNR value of the PSS is not greater than the PSS threshold THRD_PSS, the process proceeds to step 909.

In step 908, the terminal records the SNR of the PSS in a set of beam IDs that meet the threshold requirement, and parse the PSS to obtain the beam ID $N_{BCID}^{(2)}$ in the physical cell group.

In step 909, the beam number K is incremented for example by one, and then the process returns to step 903.

It should be noted that the beam loop may be performed sequentially or not.

In step 910, the beam PSS detection ends, and a set of beam IDs satisfying the threshold requirements is counted.

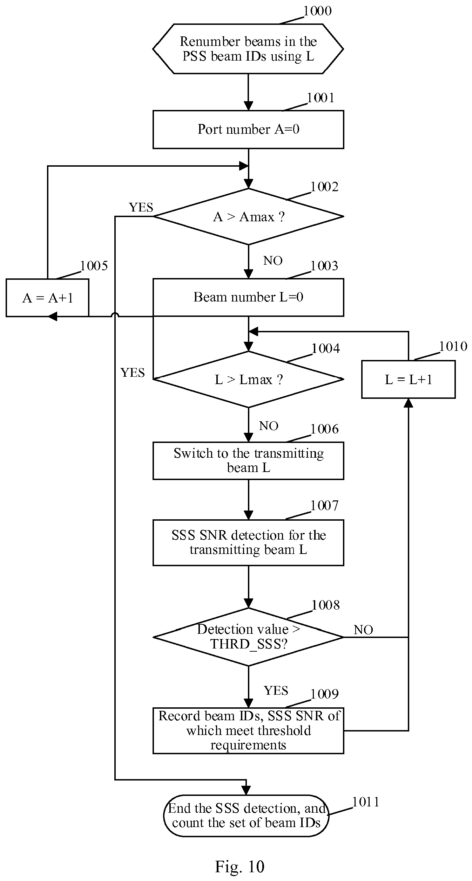

Fig. 10 is a schematic flowchart illustrating SSS detection in initial cell discovery at multi-antenna ports according to a second embodiment of the present disclosure. As shown in Fig. 10, the method includes the following steps.

In step 1000, among the set of beams, the beams satisfying the PSS threshold THRD_PSS are renumbered with the integer beam number L.

In step 1001, the terminal initializes the port number A as 0.

In step 1002, whether the port number A is greater than or equal to the maximum port number Amax is determined. If the port number A is greater than or equal to the maximum port number Amax, the process proceeds to step 1011; if the port number A is not greater than or equal to the maximum port number Amax, the process proceeds to step 1003.

In step 1003, the terminal initializes the beam number L as 0.

In step 1004, whether the beam number L is greater than the maximum beam value L'max of the beams in the beam set satisfying the PSS threshold THRD_PSS is determined. If the beam number L is greater than the maximum beam value L'max, the process proceeds to step 1005, and if the beam number L is not greater than the maximum beam value L'max, the process proceeds to step 1006.

L'max is the number of beams that satisfy the THRD_PSS threshold for a certain port.

In step 1005, the port number A is incremented, for example by one. Then, the process returns to step 1002. It should be noted that the port loop may be performed in order or not.

In step 1006, the terminal is adjusted to receive the transmitting beam L, that is, the signal of the transmitting beam L is used as the receiving signal, and the signals of other beams serve as noise.

In step 1007, the terminal performs SNR detection for the SSS of the transmitting beam L.

In step 1008, whether the SNR of the detected SSS is greater than the SRS threshold THRD_SSS is determined. If the SNR of the detected SSS is greater than the SRS threshold THRD_SSS, the process proceeds to step 1009. If the SNR of the detected SSS is not greater than the SRS threshold THRD_SSS, the process proceeds to step 1010.

In step 1009, the terminal records the SNR of the SSS in the set of beam IDs that meet the threshold requirements, and parses the SSS to obtain the physical beam-cell ID group number $N_{BCID}^{(1)}$ in the physical cell group. In conjunction with the $N_{BCID}^{(2)}$ obtained in the PSS detection as shown in Fig. 9, the beam-cell ID ($N_{ID}^{BeamCell}$) is obtained.

In step 1010, the beam number is incremented for example by one. Then, the process returns to step 1004. It should be noted that the beam loop may be performed sequentially or not.

In step 1011, the beam SSS detection ends and the set of beam IDs that meet the SSS threshold requirements are counted.

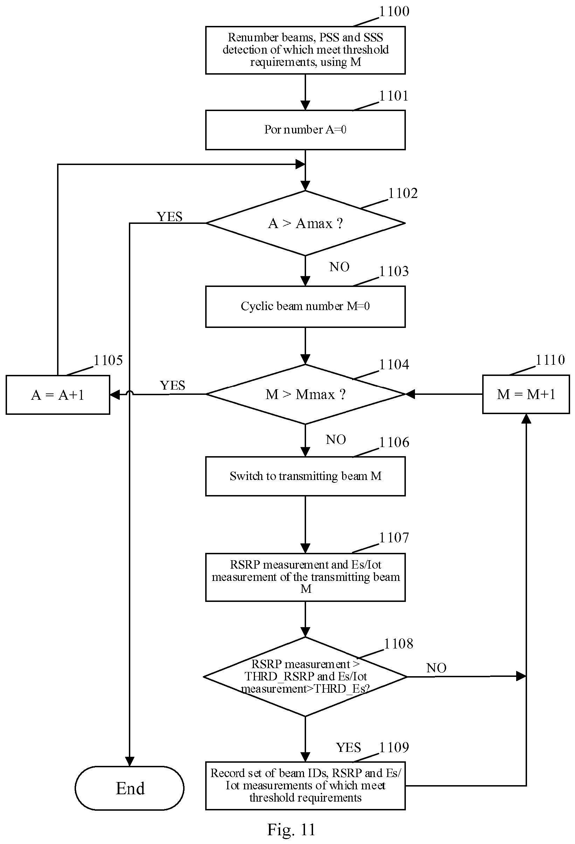

Fig. 11 is a schematic flowchart illustrating RSRP detection in initial cell discovery at multi-antenna ports according to a second embodiment of the present disclosure. As shown in Fig. 11, the method includes the following steps.

In step 1100, the beams satisfying the threshold requirements for both the PSS detection and the SSS detection are renumbered using the cyclic beam number M.

In step 1101, the terminal initializes the port number A to be 0.

In step 1102, whether the port number A is greater than or equal to the maximum port value Amax is determined. If the port number A is greater than or equal to the maximum port value Amax, the process ends. If the port number A is smaller than the maximum port value Amax, the process proceeds to step 1103.

In step 1103, the terminal initializes the initial value of the cyclic beam number M to be 0.

In step 1104, if the cyclic beam number M is greater than the maximum value M'max of the beams in the set of beams satisfying both the SSS threshold THRD_SSS and the PSS threshold THRD_PSS, the process proceeds to step 1105, and if the cyclic beam number M is not greater than M'max, the process proceeds to step 1106.

M'max is the number of beams that meet the threshold requirements for both PSS detection and SSS detection for a certain port.

In step 1105, the port number is incremented for example by one. Then, the process returns to step 1102. It should be noted that the port loop may be performed in order or not.

In step 1106, the terminal is adjusted to receive the transmitting beam M, that is, the signal of the strong transmitting beam M is used as the receiving signal, and the signals of other beams serve as the noise.

In step 1107, the terminal performs RSRP and Es/Iot measurements on the transmitting beam M.

In step 1108, after the measurements by the terminal are completed, whether both the RSRP measurement value and the Es/Iot measurement value are greater than corresponding preset thresholds (i.e., THRD_RSRP and THRD_Es) is determined. If both the RSRP measurement value and the Es/Iot measurement value are greater than corresponding preset thresholds, the process proceeds to step 1109. If not, the process proceeds to step 1110.

In step 1109, the terminal records the set of beam IDs both the RSRP and the Es/Iot of which satisfy the preset thresholds. At this time, all beams in the beam ID set are beam-cell IDs that the terminal can rccognizc.

In step 1110, the beam cyclic number M is incremented for example by one. It should be noted that the beam loop may be performed sequentially or not.

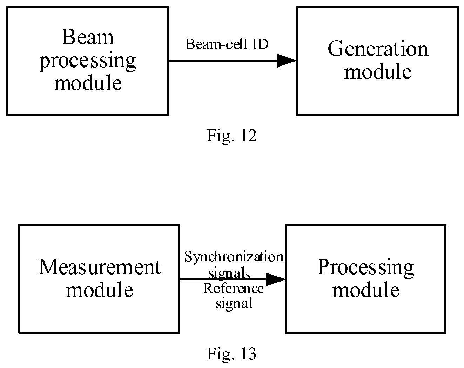

Fig. 12 is a block diagram illustrating a base station according to an embodiment of the present disclosure. As shown in Fig. 12, the base station includes at least a beam processing module and a generation module.

The beam processing module is configured to process different beams of different transceiving links to obtain beam-cell identities IDs.

The generation module is configured to generate synchronization signals and reference signals using the bcam-ccll IDs, wherein the synchronization signals or reference signals of different beams are staggered in positions on time-frequency resources to generate high frequency subframes.

The beam processing module is configured to: uniformly number the different beams of different transceiving links, and obtain each of the beam-cell IDs by adding a physical cell identity ID and a beam identity ID; or obtain each of the beam-cell IDs by performing function mapping, with the physical cell ID and the beam ID as parameters of a function.

The generation module is configured to: divide the beam-cell IDs into a plurality physical beam-cell ID groups, each of which includes a preset amount of physical beam-cell ID group numbers; generate a primary synchronization signal sequence by $N_{BCID}^{(2)}$, and perform primary synchronization signal sequence mapping; generate a secondary synchronization signal sequence by physical beam-cell ID group numbers ( $N_{BCID}^{(1)}$ ), perform secondary synchronization signal sequence mapping, generate a reference signal sequence by $N_{ID}^{BeamCell}$, and perform resource mapping on different ports to generate the high frequency subframe.

The high frequency subframe includes a reference and synchronization signal field, a control signal field, a data transmission field and a control signal feedback field.

The beam processing module and the generation module can be implemented by hardware, software or a combination of both. For example, the beam processing module and the generation module may be implemented by a digital signal processing device or a wireless signal processing chip in the base station in combination with a specific algorithm stored in the memory.

Fig. 13 is a block diagram illustrating a terminal according to an embodiment of the present disclosure. As shown in Fig. 13, the terminal includes at least a measurement module and a processing module.

The measurement module is configured to measure synchronization signals and reference signals of different beams.

The processing module is configured to compare measured synchronization signals and reference signals with corresponding preset threshold values; wherein if all of the synchronization signals and reference signals meet corresponding threshold requirements, it is determined that physical cell identities IDs and beam identities IDs can be recognized by the terminal; and select one of the beams which can be recognized by the terminal to initially reside in.

The measurement module is configured to: measure Signal Noise Ration SNR of the primary synchronization signals, measure SNR of the secondary synchronization signals, and measure Reference Signal Receiving Power RSRP and Es/Iot of the reference signals.

The measurement modules and processing modules can be implemented by hardware, software, or a combination of both. For example, the measurement module and the processing module may be implemented by a digital signal processing device or a wireless signal processing chip in the terminal combined with a specific algorithm stored in the memory.

## Claims

1. A beam processing method, comprising:

    uniformly numbering (300), by a base station, different beams of different transceiving links to obtain beam-cell identities IDs; and
    generating (301) synchronization signals and reference signals using the beam-cell IDs, wherein the synchronization signals or reference signals of different beams are staggered in positions on time-frequency resources to generate high frequency subframes;
    wherein each of the beam-cell IDs is obtained by adding a physical cell identity ID and a beam identity ID, or by performing linear function mapping on a linear function, with the physical cell ID and the beam ID as parameters of the linear function.

2. The method according to claim 1, wherein each of the synchronization signals comprises a primary synchronization signal and a secondary synchronization signal;
    wherein generating synchronization signals and reference signals using the beam-cell IDs, comprises:

    dividing the beam-cell IDs into a plurality physical beam-cell ID groups, each of which comprises a preset amount of physical beam-cell ID group numbers;
    generating a primary synchronization signal sequence by beam IDs in the divided physical groups, and performing primary synchronization signal sequence mapping; generating a secondary synchronization signal sequence by physical beam-cell ID group numbers, and performing secondary synchronization signal sequence mapping; generating a reference signal sequence by the beam-cell IDs, and performing resource mapping on different ports.

3. The method according to claim 2, wherein the primary synchronization signal sequence is generated according to the following equation:

$$d_u(n) = \begin{cases} e^{-j\frac{\pi u n(n+1)}{63}} & n = 0,1,\ldots,30 \\ e^{-j\frac{\pi u (n+1)(n+2)}{63}} & n = 31,32,\ldots,61 \end{cases} .$$

where $u$ is Zadoff-Chu root sequence index and $u$ is given by:

| $N_{BCID}^{(2)}$ | $u$ |
|---|---|
| 0 | 25 |
| 1 | 29 |
| 2 | 34 |

where $N_{BCID}^{(2)}$ represents beam IDs in the physical groups.

4. The method according to claim 2, wherein the secondary synchronization signal sequence is generated according to the following equation:

$$d(2n) = \begin{cases} s_0^{(m_0)}(n)c_0(n) & in\ subframe\ 0 \\ s_1^{(m_1)}(n)c_0(n) & in\ subframe\ 5 \end{cases}$$

$$d(2n+1) = \begin{cases} s_1^{(m_1)}(n)c_1(n)z_1^{(m_0)}(n) & in\ subframe\ 0 \\ s_0^{(m_0)}(n)c_1(n)z_1^{(m_1)}(n) & in\ subframe\ 5 \end{cases} \qquad 0 \le n \le 30$$

where the secondary synchronization signal sequence is represented by $d(0),\ldots, d(61)$, and the ways the secondary synchronization signal sequence generated in subframe 0 and subframe 5 are various;

$$c_0(n) = \tilde{c}((n+N_{BCID}^{(2)}) \bmod 31) \quad c_1(n) = \tilde{c}((n+N_{BCID}^{(2)}+3) \bmod 31) ;$$

where $m_0$ and $m_1$ are obtained by the physical beam-cell ID group numbers:

$$m_0 = m' \bmod 31$$

$$m_1 = (m_0 + \lfloor m'/31 \rfloor + 1) \bmod 31$$

$$m' = N_{BCID}^{(1)} + q(q+1)/2, \quad q = \left\lfloor \frac{N_{BCID}^{(1)} + q'(q'+1)/2}{30} \right\rfloor, q' = \lfloor N_{BCID}^{(1)}/30 \rfloor$$

where $N_{BCID}^{(1)}$ represents the physical beam-cell ID group numbers.

5. The method according to claim 2, wherein the reference signal sequence is generated according to the following equation:

$$r_{l,n_s}(m) = \frac{1}{\sqrt{2}}(1 - 2 \cdot c(2m)) + j\frac{1}{\sqrt{2}}(1 - 2 \cdot c(2m+1)), \quad m = 0,1,\dots, N_{RB}^{\max,DL} - 1$$

where $n_s$ is a time slot number in a radio frame, and $l$ is a symbol in a time slot; a pseudo-random sequence generator is initialized by $c_{init}$ below:

$$c_{init} = 2^{10} \cdot (7 \cdot (n_s + 1) + l + 1) \cdot (2 \cdot N_{ID}^{BeamCell}) + 2 \cdot N_{ID}^{BeamCell} + N_{CP}$$

where $N_{ID}^{BeamCell}$ represents a beam-cell ID, $N_{CP} = \begin{cases} 1 & \text{for normal } CP \\ 0 & \text{for extended } CP \end{cases}$.

6. The method according to any one of claims 1 to 5, wherein the high frequency subframes each comprise a reference and synchronization signal field, a control signal field, a data transmission field and a control signal feedback field.

7. The method according to claim 6, wherein the high frequency subframes each comprise an uplink high frequency subframe and/or a downlink high frequency subframe,
   wherein:

   in the uplink high frequency subframe, an uplink reference and synchronization signal field comprises an uplink secondary synchronization signal and a preamble, an uplink control signal field comprises an uplink control channel, an uplink data transmission field comprises an uplink data channel, and an uplink control signal feedback field comprises a guard period and a downlink control channel; and
   in the downlink high frequency subframe, a downlink reference and synchronization signal field comprises a reference signal RS, a primary synchronization signal PSS and a secondary synchronization signal SSS, a downlink control signal field comprises a downlink control channel and a Demodulation Reference Signal DM-RS, a downlink data transmission field comprises a downlink data channel, and a downlink control signal feedback field comprises a guard period and an uplink control channel.

8. A base station, comprising:

   a beam processing module, configured to uniformly number different beams of different transceiving links to obtain beam-cell identities IDs; and
   a generation module, configured to generate synchronization signals and reference signals using the beam-cell IDs, wherein the synchronization signals or reference signals of different beams are staggered in positions on time-frequency resources to generate high frequency subframes;
   wherein each of the beam-cell IDs is obtained by adding a physical cell identity ID and a beam identity ID, or by performing linear function mapping on a linear function with the physical cell ID and the beam ID as parameters of the linear function.

9. The base station according to claim 8, wherein each of the synchronization signals comprises a primary synchronization signal and a secondary synchronization signal;
   wherein the generation module is configured to: divide the beam-cell IDs into a plurality physical beam-cell ID groups, each of which comprises a preset amount of physical beam-cell ID group numbers; generate a primary synchronization signal sequence by beam IDs in the divided physical groups, and perform primary synchronization signal sequence mapping; generate a secondary synchronization signal sequence by physical beam-cell ID group numbers, perform secondary synchronization signal sequence mapping, and perform resource mapping on different ports to generate the high frequency subframes.

**Patentansprüche**

1. Strahlverarbeitungsverfahren, umfassend:

   gleichförmiges Nummerieren (300), durch eine Basisstation, verschiedener Strahlen unterschiedlicher übermittelnder Verbindungen, um Strahl-Zelle-Identitäten IDs zu erhalten; und
   Erzeugen (301) von Synchronisationssignalen und Referenzsignalen unter Verwendung der Strahl-Zelle-IDs, wobei die Synchronisationssignale oder Referenzsignale verschiedener Strahlen in Positionen auf Zeit-Frequenz-Ressourcen versetzt sind, um Hochfrequenz-Subframes zu erzeugen;
   wobei jede der Strahl-Zelle-IDs durch Addieren einer physischen Zelllidentität ID und einer Strahlidentität ID oder durch Durchführen von Linearfunktionsabbildung auf einer linearen Funktion mit der physischen Zellen-ID und der Strahl-ID als Parameter der linearen Funktion erhalten wird.

2. Verfahren nach Anspruch 1, wobei jedes der Synchronisationssignale ein primäres Synchronisationssignal und ein sekundäres Synchronisationssignal umfasst;
   wobei Erzeugen von Synchronisationssignalen und Referenzsignalen unter Verwendung der Strahl-Zelle-IDs umfasst:

   Teilen der Strahl-Zelle-IDs in eine Vielzahl von physischen Strahl-Zelle-ID-Gruppen, von welchen jede eine voreingestellte Menge an physischen Strahl-Zelle-ID-Gruppennummern umfasst;
   Erzeugen einer primären Synchronisationssignalsequenz durch Strahl-IDs in den geteilten physischen Gruppen und Durchführen von primärer Synchronisationssignalsequenzabbildung; Erzeugen einer sekundären Synchronisationssignalsequenz durch physische Strahl-Zelle-ID-Gruppennummern und Durchführen von sekundärer Synchronisationssignalsequenzabbildung; Erzeugen einer Referenzsignalsequenz durch die Strahl-Zelle-IDs und Durchführen von Ressourcenabbildung auf verschiedenen Anschlüssen.

3. Verfahren nach Anspruch 2, wobei die primäre Synchronisationssignalsequenz gemäß der folgenden Gleichung erzeugt wird:

$$d_u(n) = \begin{cases} e^{-j\frac{\pi u n(n+1)}{63}} & n = 0,1,\dots,30 \\ e^{-j\frac{\pi u(n+1)(n+2)}{63}} & n = 31,32,\dots,61 \end{cases}$$

wo u Zadoff-Chu Wurzelsequenzindex ist und u gegeben ist durch:

| $N_{BCID}^{(2)}$ | $u$ |
|---|---|
| 0 | 25 |
| 1 | 29 |
| 2 | 34 |

wo $N_{BCID}^{(2)}$ Strahl-IDs in den physischen Gruppen darstellt.

4. Verfahren nach Anspruch 2, wobei die sekundäre Synchronisationssignalsequenz gemäß der folgenden Gleichung erzeugt wird:

$$d(2n) = \begin{cases} s_0^{(m_0)}(n)c_0(n) \ in \ Subframe0 \\ s_1^{(m_1)}(n)c_0(n) \ in \ Subframe5 \end{cases}$$

$$d(2n+1) = \begin{cases} s_1^{(m_1)}(n)c_1(n)z_1^{(m_0)}(n) \ in \ Subframe0 \\ s_0^{(m_0)}(n)c_1(n)z_1^{(m_1)}(n) \ in \ Subframe5 \end{cases} \quad 0 \le n \le 30$$

wo die sekundäre Synchronisationssignalsequenz durch $d(0),...,d(61)$ dargestellt ist und die Arten der in Subframe 0 und Subframe 5 erzeugten sekundären Synchronisationssignalsequenz unterschiedlich sind;

$$c_0(n) = \tilde{c}\left(\left(n + N_{BCID}^{(2)}\right) \bmod 31\right)$$

$$c_1(n) = \tilde{c}\left(\left(n + N_{BCID}^{(2)} + 3\right) \bmod 31\right);$$

wo $m_0$ und $m_1$ durch die physischen Strahl-Zelle-ID-Gruppennummern erhalten werden:

$$m_0 = m' \bmod 31$$

$$m_1 = (m_0 + \lfloor m'/31 \rfloor + 1) \bmod 31$$

$$m' = N_{BCID}^{(1)} + q(q+1)/2, \quad q = \left\lfloor \frac{N_{BCID}^{(1)} + q'(q'+1)/2}{30} \right\rfloor, \quad q' = \left\lfloor N_{BCID}^{(1)}/30 \right\rfloor$$

wo $N_{BCID}^{(1)}$ die physischen Strahl-Zelle-ID-Gruppennummern darstellt.

5. Verfahren nach Anspruch 2, wobei die Referenzsignalsequenz gemäß der folgenden Formel erzeugt wird:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,...,N_{RB}^{\max,DL} - 1$$

wo $n_s$ eine Zeitschlitznummer in einem Funkframe ist und $l$ ein Symbol in einem Zeitschlitz ist;
ein Pseudozufallssequenzgenerator durch folgendes $c_{init}$ initialisiert wird:

$$c_{init} = 2^{10} \cdot (7 \cdot (n_s + 1 (+l+1) (2 \cdot N_{ID}^{StrahlZelle}) + 2 \cdot N_{ID}^{StrahlZelle} + N_{CP}$$

wobei $N_{ID}^{StrahlZelle}$ eine Strahl-Zelle-ID darstellt, $N_{CP} = \begin{cases} 1 & \text{für normale CP} \\ 0 & \text{für erweiterte CP.} \end{cases}$

6. Verfahren nach einem der Ansprüche 1 bis 5, wobei die Hochfrequenz-Subframes jeweils ein Referenz- und Synchronisationssignalfeld, ein Steuersignalfeld, ein Datenübertragungsfeld und ein Steuersignalrückmeldungsfeld umfassen.

7. Verfahren nach Anspruch 6, wobei die Hochfrequenz-Subframes jeweils ein Uplink-Hochfrequenz-Subframe und/oder ein Downlink-Hochfrequenz-Subframe umfassen,
wobei:

in dem Uplink-Hochfrequenz-Subframe ein Uplink-Referenz- und Synchronisationssignalfeld ein sekundäres Uplink-Synchronisationssignal und eine Präambel umfasst, ein Uplink-Steuersignalfeld einen Uplink-Steuerkanal umfasst, ein Uplink-Datenübertragungsfeld einen Uplink-Datenkanal umfasst und ein Uplink-Steuersignalrückmeldungsfeld eine Schutzperiode und einen Downlink-Steuerkanal umfasst; und
in dem Downlink-Hochfrequenz-Subframe ein Downlink-Referenz- und Synchronisationssignalfeld ein Referenzsignal RS, ein primäres Synchronisationssignal PSS und ein sekundäres Synchronisationssignal SSS umfasst, ein Downlink-Steuersignalfeld einen Downlink-Steuerkanal und ein Demodulationsreferenzsignal DM-RS umfasst, ein Downlink-Datenübertragungsfeld einen Downlink-Datenkanal umfasst und ein Downlink-Steuersignalrückmeldungsfeld eine Schutzperiode und einen Uplink-Steuerkanal umfasst.

**8.** Basisstation, umfassend:

ein Strahlverarbeitungsmodul, das zum gleichförmigen Nummerieren verschiedener Strahlen unterschiedlicher übermittelnder Verbindungen konfiguriert ist, um Strahl-Zelle-Identitäten IDs zu erhalten; und
ein Erzeugungsmodul, das zum Erzeugen von Synchronisationssignalen und Referenzsignalen unter Verwendung der Strahl-Zelle-IDs konfiguriert ist, wobei die Synchronisationssignale oder Referenzsignale verschiedener Strahlen in Positionen auf Zeit-Frequenz-Ressourcen versetzt sind, um Hochfrequenz-Subframes zu erzeugen;
wobei jede der Strahl-Zelle-IDs durch Addieren einer physischen Zelllidentität ID und einer Strahlidentität ID oder durch Durchführen von Linearfunktionsabbildung auf einer linearen Funktion mit der physischen Zellen-ID und der Strahl-ID als Parameter der linearen Funktion erhalten wird.

**9.** Basisstation nach Anspruch 8, wobei jedes der Synchronisationssignale ein primäres Synchronisationssignal und ein sekundäres Synchronisationssignal umfasst;
wobei das Erzeugungsmodul konfiguriert ist zum: Teilen der Strahl-Zelle-IDs in eine Vielzahl von physischen Strahl-Zelle-ID-Gruppen, von welchen jede eine voreingestellte Menge an physischen Strahl-Zelle-ID-Gruppennummern umfasst; Erzeugen einer primären Synchronisationssignalsequenz durch Strahl-IDs in den geteilten physischen Gruppen und Durchführen von primärer Synchronisationssignalsequenzabbildung; Erzeugen einer sekundären Synchronisationssignalsequenz durch physische Strahl-Zelle-ID-Gruppennummern, Durchführen von sekundärer Synchronisationssignalsequenzabbildung und Durchführen von Ressourcenabbildung auf verschiedenen Anschlüssen, um die Hochfrequenz-Subframes zu erzeugen.

**Revendications**

**1.** Procédé de traitement de faisceau, comprenant :

le numérotage de manière uniforme ((300), par une station de base, de différents faisceaux de différentes liaisons d'émission-réception pour obtenir des identités ID de cellule de faisceau ; et
la génération (301) de signaux de synchronisation et de signaux de référence en utilisant les ID de cellule de faisceau, dans lequel les signaux de synchronisation ou signaux de référence de différents faisceaux sont échelonnés dans des positions sur des ressources temps-fréquence pour générer des sous-trames haute fréquence ;
dans lequel chacune des ID de cellule de faisceau est obtenue par ajout d'une identité ID de cellule physique et d'une identité ID de faisceau, ou par réalisation d'un mappage de fonction linéaire sur une fonction linéaire, avec l'ID de cellule physique et l'ID de faisceau en tant que paramètres de la fonction linéaire.

**2.** Procédé selon la revendication 1, dans lequel chacun des signaux de synchronisation comprend un signal de synchronisation primaire et un signal de synchronisation secondaire ;
dans lequel la génération de signaux de synchronisation et de signaux de référence en utilisant des ID de cellule de faisceau, comprend :

la division des ID de cellule de faisceau en une pluralité de groupes d'ID de cellule de faisceau physiques, dont chacun comprend une quantité prédéfinie de numéros de groupe d'ID de cellule de faisceau physique ;
la génération d'une séquence de signal de synchronisation primaire par des ID de faisceau dans les groupes physiques divisés, et la réalisation d'un mappage de séquence de signal de synchronisation primaire ; la génération d'une séquence de signal de synchronisation secondaire par des numéros de groupe d'ID de cellule de faisceau physique, et la réalisation d'un mappage de séquence de signal de synchronisation secondaire ;
la génération d'une séquence de signa de référence par les ID de cellule de faisceau, et la réalisation d'un mappage de ressources sur différents ports.

**3.** Procédé selon la revendication 2, dans lequel la séquence de signal de synchronisation primaire est générée selon l'équation suivante :

$$d_u(n) = \begin{cases} e^{-j\frac{\pi u n(n+1)}{63}} & n = 0, 1, \ldots, 30 \\ e^{-j\frac{\pi u(n+1)(n+2)}{63}} & n = 31, 32, \ldots, 61 \end{cases}$$

où $u$ est un indice de séquence racine de Zadoff-Chu et $u$ est donné par :

| $N_{BCID}^{(2)}$ | $u$ |
|---|---|
| 0 | 25 |
| 1 | 29 |
| 2 | 34 |

où $N_{BCID}^{(2)}$ représente des ID de faisceau dans les groupes physiques.

4. Procédé selon la revendication 2, dans lequel la séquence de signal de synchronisation secondaire est générée selon l'équation suivante :

$$d(2n) = \begin{cases} s_0^{(m_0)}(n)c_0(n) \ dans \ la \ sous-trame \ 0 \\ s_1^{(m_1)}(n)c_0(n) \ dans \ la \ sous-trame \ 5 \end{cases}$$

$$0 \leq n \leq 30$$

$$d(2n+1) = \begin{cases} s_1^{(m_1)}(n)c_1(n)z_1^{(m_0)}(n) \ dans \ la \ sous-trame \ 0 \\ s_0^{(m_0)}(n)c_1(n)z_1^{(m_1)}(n) \ dans \ la \ sous-trame \ 5 \end{cases}$$

où la séquence de signal de synchronisation secondaire est représentée par $d(0)$,..., $d(61)$ et les manières de la séquence de signal de synchronisation secondaire générée dans la sous-trame 0 et la sous-trame 5 sont diverses ;

$c_0(n) = \tilde{c}\left((n + N_{BCID}^{(2)})mod31\right)$ $c_1(n) = \tilde{c}\left((n + N_{BCID}^{(2)} + 3)mod31\right)$ ; où $m_0$ et $m_1$ sont obtenus par les numéros de groupe d'ID de cellule de faisceau :

$$m_0 = m'mod31$$

$$m_1 = (m_0 + \lfloor m'/31 \rfloor + 1)mod31$$

$$m' = N_{BCID}^{(1)} + q(q+1)/2, q = \left\lfloor \frac{N_{BCID}^{(1)} + q'(q'+1)/2}{30} \right\rfloor, q' = \left\lfloor N_{BCID}^{(1)}/30 \right\rfloor$$

où $N_{BCID}^{(1)}$ représente les numéros de groupe d'ID de cellule de faisceau physique.

5. Procédé selon la revendication 2, dans lequel la séquence de signal de référence est générée selon l'équation suivante :

$$r_{l,n_s}(m) = \frac{1}{\sqrt{2}}(1 - 2 \cdot c(2m)) + j\frac{1}{\sqrt{2}}(1 - 2 \cdot c(2m+1)), m = 0,1..., N_{RB}^{max,DL} - 1$$

où $n_s$ est un numéro d'intervalle de temps dans une trame radio et $l$ est un symbole dans un intervalle de temps ; un générateur de séquence pseudo-aléatoire est initialisé par $c_{init}$ ci-dessous :

$c_{init} = 2^{10} \cdot (7 \cdot (n_s + 1) + l + 1) \cdot (2 \cdot N_{ID}^{cellule \ de \ faisceau}) + 2 \cdot N_{ID}^{cellule \ de \ faisceau} + N_{CP}$ où $N_{ID}^{cellule \ de \ faisceau}$ représente une ID de cellule de faisceau,

$$N_{CP} = \begin{cases} 1 \ pour \ CP \ normal \\ 0 \ pour \ CP \ \acute{e}tendu \end{cases}$$

6. Procédé selon l'une quelconque des revendications 1 à 5, dans lequel les sous-trames haute fréquence comprennent chacune un champ de signal de référence et de synchronisation, un champ de signal de commande, un champ de transmission de données et un champ de rétroaction de signal de commande.

7. Procédé selon la revendication 6, dans lequel les sous-trames haute fréquence comprennent chacune une sous-trame haute fréquence de liaison montante et/ou une sous-trame haute fréquence de liaison descendante, dans lequel :

dans la sous-trame haute fréquence de liaison montante, un champ de signal de référence et de synchronisation de liaison montante comprend un signal de synchronisation secondaire de liaison montante et un préambule, un champ de signal de commande de liaison montante comprend un canal de commande de liaison montante, un champ de transmission de données de liaison montante comprend un canal de données de liaison montante et un champ de rétroaction de signal de commande de liaison montante comprend une période de garde et un canal de commande de liaison descendante ; et
dans la sous-trame haute fréquence de liaison descendante, un champ de signal de référence et de synchronisation de liaison descendante comprend un signal de référence RS, un signal synchronisation primaire PSS et un signal de synchronisation secondaire SSS, un champ de signal de commande de liaison descendante comprend un canal de commande de liaison descendante et un signal de référence de démodulation DM-RS, un champ de transmission de données de liaison descendante comprend un canal de données de liaison descendante et un champ de rétroaction de signal de commande de liaison descendante comprend une période de garde et un canal de commande de liaison montante.

8. Station de base, comprenant :

un module de traitement de faisceau configuré pour numéroter de manière uniforme différents faisceaux de différentes liaisons d'émission-réception pour obtenir des identités ID de cellule de faisceau ; et
un module de génération, configuré pour générer des signaux de synchronisation et des signaux de référence en utilisant les ID de cellule de faisceau, dans laquelle les signaux de synchronisation ou signaux de référence de différents faisceaux sont échelonnés dans des positions sur des ressources temps-fréquence pour générer des sous-trames haute fréquence ;
dans laquelle chacune des ID de cellule de faisceau est obtenue par ajout d'une identité ID de cellule physique et d'une identité ID de faisceau ou par réalisation d'un mappage de fonction linéaire sur une fonction linéaire, avec l'ID de cellule physique et l'ID de faisceau en tant que paramètres de la fonction linéaire.

9. Station de base selon la revendication 8, dans laquelle chacun des signaux de synchronisation comprend un signal de synchronisation primaire et un signal de synchronisation secondaire ;
dans laquelle le module de génération est configuré pour : diviser les ID de cellule de faisceau en une pluralité de groupes d'ID de cellule de faisceau physique, dont chacun comprend une quantité prédéfinie de numéros de groupe d'ID de cellule de faisceau physique; générer une séquence de signal de synchronisation primaire par des ID de faisceau dans les groupes physiques divisés, et réaliser un mappage de séquence de signal de synchronisation primaire ; générer une séquence de signal de synchronisation secondaire par des numéros de groupe d'ID de cellule de faisceau physique, réaliser un mappage de séquence de signal de synchronisation secondaire, et réaliser un mappage de ressources sur différents ports pour générer les sous-trames haute fréquence.

power
amplifier
(PA)

antenna0(AT 0)

sector0(St 0)

Analog
Beam
FOrming
(ABF)
A₀

digital-to-
analog
converter

transciving link

Digital
Beam
Forming
（DBF）

PA

AT (M-1)

St n

PA

AT ((N-1)*M)

DAC

ABF
A_N-1

PA

AT (N*M-1)

Tx (N-1)

Fig. 1

| uplink SRS | uplink control | uplink data channel | G P | downlink control |
|---|---|---|---|---|

Fig. 2(a)

| downlink RS/PSS/SSS | downlink control | D M R S | downlink data channel | G P | uplink control |
|---|---|---|---|---|---|

Fig. 2(b)

300

Process different beams for different transceiving links to obtain beam-cell identities IDs

301

Generate synchronization signals and reference signals using the beam-cell IDs

302

Measure synchronization signals and reference signals for different beams, and compare measurement results with corresponding preset threshold values; if all of the synchronization signals and reference signals meet corresponding threshold requirements, deem that physical cell identities IDs and beam identities IDs can be recognized by the terminal, and select one of the beams which can be recognized by the terminal to initially reside in

Fig. 3

one subframe= 250 us

one time slot,  30 OFDMs

| PSS 1 | PSS 2 | PSS 3 | PSS 4 | SSS 1 | SSS 2 | SSS 3 | SSS 4 | P B C H | P B C H | | |

Fig. 4

one subframe = 250 us

one time slot, 30 OFDMs

| | | | | | | | | | | | |
|---|---|---|---|---|---|---|---|---|---|---|---|
| $RS1_1$ | $RS2_1$ | $RS3_1$ | $RS4_1$ | $RS1_2$ | $RS2_2$ | $RS3_2$ | $RS4_2$ | $RS1_3$ | $RS2_3$ | $RS3_3$ | $RS4_3$ |
| $RS1_2$ | $RS2_2$ | $RS3_2$ | $RS4_2$ | $RS1_3$ | $RS2_3$ | $RS3_3$ | $RS4_3$ | $RS1_0$ | $RS2_0$ | $RS3_0$ | $RS4_0$ |
| $RS1_3$ | $RS2_3$ | $RS3_3$ | $RS4_3$ | $RS1_0$ | $RS2_0$ | $RS3_0$ | $RS4_0$ | $RS1_1$ | $RS2_1$ | $RS3_1$ | $RS4_1$ |
| $RS1_0$ | $RS2_0$ | $RS3_0$ | $RS4_0$ | $RS1_1$ | $RS2_1$ | $RS3_1$ | $RS4_1$ | $RS1_2$ | $RS2_2$ | $RS3_2$ | $RS4_2$ |
| PSS1 | PSS2 | PSS3 | PSS4 | SSS1 | SSS2 | SSS3 | SSS4 | PBCH | PBCH | PBCH | PBCH |
| PSS1 | PSS2 | PSS3 | PSS4 | SSS1 | SSS2 | SSS3 | SSS4 | PBCH | PBCH | PBCH | PBCH |
| PSS1 | PSS2 | PSS3 | PSS4 | SSS1 | SSS2 | SSS3 | SSS4 | PBCH | PBCH | PBCH | PBCH |
| PSS1 | PSS2 | PSS3 | PSS4 | SSS1 | SSS2 | SSS3 | SSS4 | PBCH | PBCH | PBCH | PBCH |
| | | | | | | | | | | | |
| | | | | | | | | | | | |
| | | | | | | | | | | | |
| | | | | | | | | | | | |

Fig. 5

```
                                                    600
              ┌─────────────────────────────┐
              │       beam number K=0        │
              └─────────────────────────────┘
                           │
                           ▼
                                        601                      606
   YES          ╱◇◇◇◇◇◇◇◇◇◇◇◇◇◇◇◇╲          ┌──────────────┐
◄──────────────◇    K >= Kmax ?    ◇         │  Increment   │
              ╲◇◇◇◇◇◇◇◇◇◇◇◇◇◇◇◇╱          │  the beam    │
                           │                  │  number K    │
                          NO                  └──────────────┘
                                     602             ▲
                           ▼                         │
              ┌─────────────────────────────┐        │
              │  Switch to the position for  │        │
              │  receiving the transmitting  │        │
              │           beam K             │        │
              └─────────────────────────────┘        │
                           │          603             │
                           ▼                          │
              ┌─────────────────────────────┐         │
              │  PSS SNR detection for the   │         │
              │     transmitting beam K      │         │
              └─────────────────────────────┘         │
                           │                          │
                           ▼          604             │
                ╱◇◇◇◇◇◇◇◇◇◇◇◇◇◇╲                      │
               ◇   the detection >  ◇   NO            │
               ◇     THRD_PSS?      ◇─────────────────┤
                ╲◇◇◇◇◇◇◇◇◇◇◇◇◇◇╱                      │
                           │                          │
                          YES         605             │
                           ▼                          │
              ┌─────────────────────────────┐         │
              │  Record the set of beam IDs  │─────────┘
              │  PSS SNR of which meets the  │
              │         requirements         │
              └─────────────────────────────┘
                           │
                           ▼
                    ╭───────────────╮    607
                    │  End the PSS   │
                    │ detection of the│
                    │ beams and count the│
                    │  set of beam IDs │
                    ╰───────────────╯
```

Fig. 6

Fig. 7

Renumber beams, PSS detection and SSS detection of which meet threshold requirements, using M — 800

Beam number M=0 — 801

M >= Mmax ? — 802

YES

NO

Switch to receiving the transmitting beam M — 803

RSRP & Es/Iot detection for the transmitting beam M — 804

RSRP detection value > THRD-RSRP & Es/Iot detection value > THRD_Es? — 805

NO

M = M+1 — 807

YES

End

Record set of beam IDs, RSRP and Es/Iot of which meet conditions — 806

Fig. 8

Fig. 9

Fig. 10

1100

Renumber beams, PSS and SSS
detection of which meet threshold
requirements, using M

1101

Por number A=0

1102

A > Amax ?

YES

NO 1103

Cyclic beam number M=0

1105

A = A+1

1104

M > Mmax ?

YES

NO 1106

1110

M = M+1

Switch to transmitting beam M

1107

RSRP measurement and Es/Iot
measurement of the transmitting beam
M

1108

RSRP measurement >
THRD_RSRP and Es/Iot
measurement>THRD_Es?

NO

YES 1109

End

Record set of beam IDs, RSRP and Es/
Iot measurements of which meet
threshold requirements

Fig. 11

| Beam processing module | → Beam-cell ID → | Generation module |

Fig. 12

| Measurement module | → Synchronization signal, Reference signal → | Processing module |

Fig. 13

**EP 3 389 319 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014321375 A
- US 2013064239 A
- EP 2916601 A